Europäisches Patentamt

European Patent Office

Office européen des brevets

(11) Publication number: **0 172 295**
**B1**

(12) **EUROPEAN PATENT SPECIFICATION**

(45) Date of publication of patent specification: **26.10.88**

(21) Application number: **84830208.9**

(22) Date of filing: **06.07.84**

(51) Int. Cl.⁴: **A 01 D 34/63**

(54) **Mowing machine.**

(43) Date of publication of application:
**26.02.86 Bulletin 86/09**

(45) Publication of the grant of the patent:
**26.10.88 Bulletin 88/43**

(84) Designated Contracting States:
**AT BE CH DE FR GB LI NL SE**

(56) References cited:
**FR-A-2 472 334**
**US-A-3 893 284**

(73) Proprietor: **SIAG S.p.A.**
**Via Leonardo da Vinci, 48/D-E-F**
**I-20062 Cassano d'Adda Milano (IT)**

(72) Inventor: **Fedeli, Luisa**
**Via dei Gracchi, 26**
**I-20146 Milano (IT)**

(74) Representative: **Cicogna, Franco**
**Ufficio Internazionale Brevetti Dott.Prof. Franco**
**Cicogna Via Visconti di Modrone, 14/A**
**I-20122 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to an improved mowing machine.

As it is known there are commercially available several types of rotary mowing machines, which are provided with a driving assembly operating, either directly or indirectly, one or more grass cutting blades, rotating about an axis substantially perpendicular to the ground and, in some cases, also to cause the mowing machine to advance.

The mentioned mowing machines are provided with a casing which houses, at the top and laterally, the cutting blade or blades.

The casing is also effective to prevent the mowing machine operator from accidentally contacting the rotating blades, and prevent the rotating blades from projecting cut grass or other bodies on the ground in undesired directions.

The casing is frequently provided with a conveying duct, for evacuating cut grass towards the rear of the mowing machine, in such a way as to afford the possibility of applying a vessel for said cut grass at the outlet mouth of said duct.

In the case of a mowing machine operated by an operator walking behind the machine itself, the casing is caused to rest on the ground by means of three or four wheels or two rollers, or a wheel and roller combination.

In some types of mowing machines, wheels or rollers are also used for the advancing of the mowing machine, as driven by the driving engine.

In that case, the cut grass collecting vessel is usually coupled to the casing in such a way that, as the operator adjusts the grass cutting level or height of the machine, said vessel is caused to rise or lower together with the casing or the cutting blades.

On the other hand, in the case of mowing machines driven by an operator sitting on the machine itself, the latter is usually of a comparatively more complex structure: the casing housing the cutting mechanism of the mowing machine is usually supported by the main frame of the machine.

The mentioned main frame supports the driver, the guiding and advancing members, as well as the grass cutting and collecting member.

Usually the grass cutting members—(blades and blade encompassing casing)—are displaced vertically with respect to the ground, in such a way as to afford the possibility of adjusting the cutting level, whereas all of the other members, including the cut grass collecting vessel, are supported by the main frame and are not displaced as the operator adjusts the cutting level.

In that case, the outlet mouth of the conveying duct, as formed in said casing, is arranged at the top or at the bottom, with respect to the inlet mouth of said cut grass collecting vessel.

Also known is the fact that a mowing machine is used both in the case wherein the grass is dry and in the case wherein said grass is wet.

As the moisture conditions of the grass changes, also the working conditions changes, as well as the cut grass collecting conditions.

Whereas a dry grass is easy to cut and collect, since the cut grass portions are held separated and hence are light, a wet grass is difficult to cut and collect.

In fact the cut grass portions or fragments are of a comparatively greater weight and accordingly they may hardly be projected by the blades into the inside of the collecting vessel.

Moreover the surface moisture causes grass agglomerates to be formed which are of a great weight and may be hardly conveyed to the collecting vessel.

The presently commercially available mowing machines operate under heavy working conditions, whereby the conveying duct, as formed in the casing of the machine, is obstructed by cut grass not projected into the inside of said cut grass collecting vessel.

Thus, under the mentioned heavy working conditions, the operator is compelled to frequently clean the conveying duct of the casing.

It should be apparent that this manual intervention is an uncomfortable operation, mainly in the case of a mowing machine driven by an operator sitting on the main frame of the machine itself.

For example, the French reference FR—A—2 472 334 discloses a mowing machine having the characteristics of the preamble of the main Claim.

Accordingly, the task of the present invention is to overcome the above mentioned drawbacks by affording the possibility of emptying the cut grass conveying duct by means of an easy remote operation and without any manual intervention by the mowing machine operator.

Within the above task, it is a main object of the present invention to provide a mowing machine structure wherein all of the component members thereof are rationally arranged and designed, thereby providing a machine vary safe for the operator.

Another object of the present invention is to provdie a mowing machine with a cut grass collecting vessel having a very high compacting capacity, thereby reducing to a minimum the number of emptying operations and accordingly accelerating the grass cutting work.

Yet another object of the present invention is to provide such a mowing machine which is effective to prevent cut grass from accumulating on the ground.

According to one aspect of the present invention, the above task and objects, as well as yet other objects which will become more apparent thereinafter, are achieved by a grass mowing machine according to claim 1.

Further characteristics and advantages of the mowing machine according to the present invention will become more apparent thereinafter from the following detailed description of a preferred embodiment thereof, being illustrated, by way of example and not of limitation, in the accompanying drawings, where:

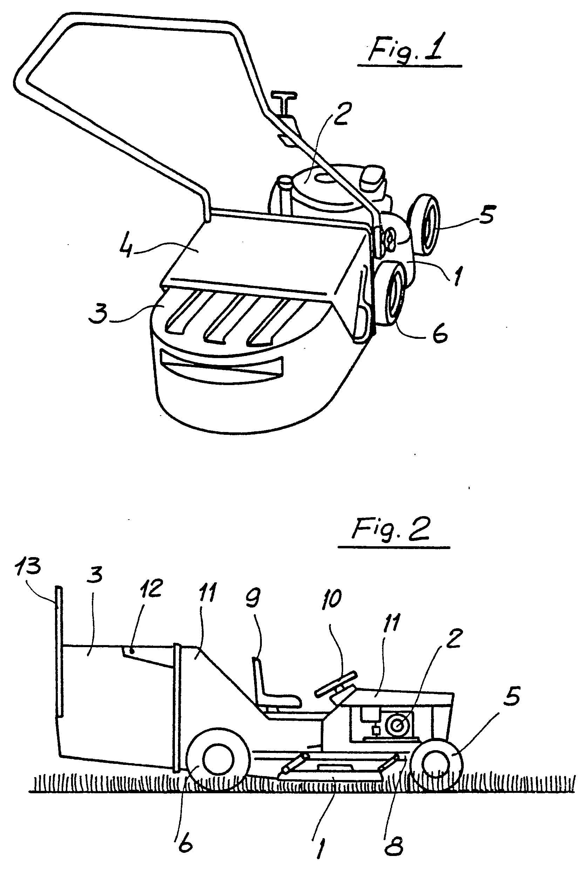

Fig. 1 is a schematic view illustrating a wheeled mowing machine provided for being driven by a walking operator;

Fig. 2 illustrates a mowing machine effective to be operated by a sitting operator;

Fig. 3 illustrates the rear portion of the mowing machine of Fig. 1 as the cut grass collecting vessel is removed therefrom;

Fig. 4 illustrates the emptying operation for the collecting vessel of the mowing machine illustrated in Fig. 1;

Fig. 5 is a schematic cross-sectional view illustrating a mowing machine of the type of Fig. 1 to which there is applied the movable wall according to the present invention;

Fig. 6 is a perspective view illustrating the discharging mouth of the cut grass conveying duct;

Fig. 7 illustrates the mowing machine of Fig. 5 under a condition of maximum filling, with the cut grass arranged also in the discharging duct;

Fig. 8 illustrates the mowing machine of Fig. 7 after the tilting of the movable wall;

Fig. 9 illustrates the mowing machine of Fig. 7 with the cut grass collecting vessel emptied by raising its rear portion and with the formation on the ground of cut grass heaps;

Fig. 10 is a schematic view illustrating a mowing machine with a sitting operator, therein there are also illustrated in cross-section the casing and conveying duct;

Fig. 11 illustrates the mowing machine of Fig. 10 with the cut grass collecting vessel in a completely raised condition, for the discharging.

With reference to the above Figures, the mowing machine according to the present invention comprises a casing, indicated generally at 1, in the inside whereof there are arranged grass cutting members which are operated or driven either directly or indirectly by an engine 2.

On the rear portion of said casing there is mounted a cut grass collecting vessel, indicated at 3, which is located at the discharging mouth of said conveying duct.

Over the casing a baffle member 4 may be arranged which is effective both to hold in position the vessel 3 and to protect the cut grass outlet mouth, as the vessel is disengaged.

More specifically the casing of the mowing machine driven by a walking operator is mounted on one or two front wheels 5 and on two rear wheels 6 which may possibly be replaced by rollers.

A suitable handle 7 affords the possibility of driving said mowing machine.

In the case wherein said mowing machine is operated by a sitting operator, the casing is usually suspended or supported on the main frame of the machine.

Said main frame, indicated at 8, supports the engine 2, the seat 9 and the driving members 10.

The mowing machine is also provided with front wheels 5, which may be steered, and with two rear wheels 6, generally of the driving type.

A suitable body 11 covers the engine and operating or driving members.

The cut grass collecting vessel 3 is articulated about an axis 12, arranged in such a way as to permit the emptying operation, for example by operating a handle 13 associated with said vessel.

Whereas on the mowing machine with a sitting operator the cut grass collecting vessel, usually of large and heavy structure is generally fixed on the machine and articulated thereto in order to be discharged by a simple rotation, with a consequent raising of its rear portion, in a mowing machine with a walking operator the latter may select the way in which the collecting vessel will be emptied.

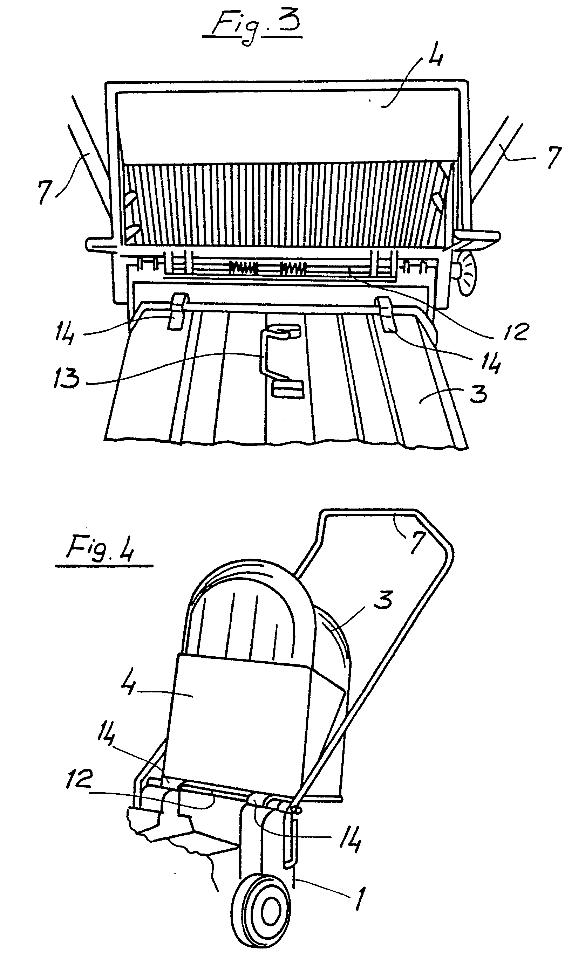

In other words the operator may disengage the vessel from the pin 12, possibly after having raised the baffle 4, the handle 13 facilitating that operation, as it should be apparent from Figure 3.

The hook members 14, applied on the vessel 3, act to accelerate that operation.

It is also possible to raise the rear portion of the vessel, as held in position by the baffle 4, by causing it to pass through the handle 7.

The hook members 14 facilitate the pivoting of the vessel about the pin 12, thereby assuring the rotation of the vessel itself (Fig. 4).

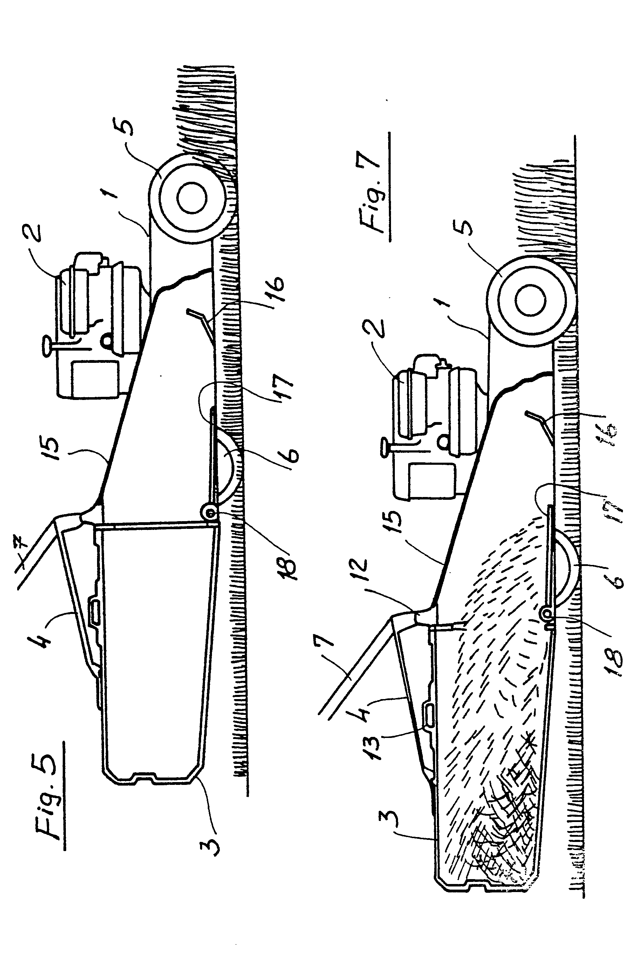

A main feature of the invention is better illustrated in Figs. 5 to 11.

Those figures show that the rotating blade 16 projects the cut grass outside of the casing into the conveying duct 15; the latter has a cross-section which increases and raises towards the discharging mouth, in order to facilitate the removing of cut grass.

In the prior art the bottom portion of the conveyor is a free one, or it may be closed by a fixed wall.

The main feature of the mowing machine according to the present invention is that there is provided a movable wall 17, which forms at least partially the lower or bottom portion of the conveying duct and is capable of rotating about an axis 18, arranged on the rear end bottom portion of the conveying duct 15.

With the mentioned structure, said movable wall may rotate upwardly and rearwardly, in such a way as to be located substantially vertically in the inside of the conveyor, at the discharging mouth thereof, that is near the inlet mouth of the cut grass collecting vessel, as it is better illustrated in Figs. 5 and 6.

The upward and rearward rotation of the movable wall 17 may be obtained in several ways.

That rotation occurs before the disengaging of the vessel by the operator, or it is timed with the rotation of said vessel, in such a way that the rotating blade is prevented from projecting objects outside of the conveyor during the raising step of the collecting vessel.

As it should be apparent, the timing system for timing the lower or bottom wall rotation and the discharging of the cut grass collecting vessel does not pertain to the invention.

In fact the invention simply provides for the arrangement of a movable wall which, as it is caused to rotate, is effective to "clean" the conveying duct, thereby the cut grass may be compacted in an optimal way in the inside of the collecting vessel.

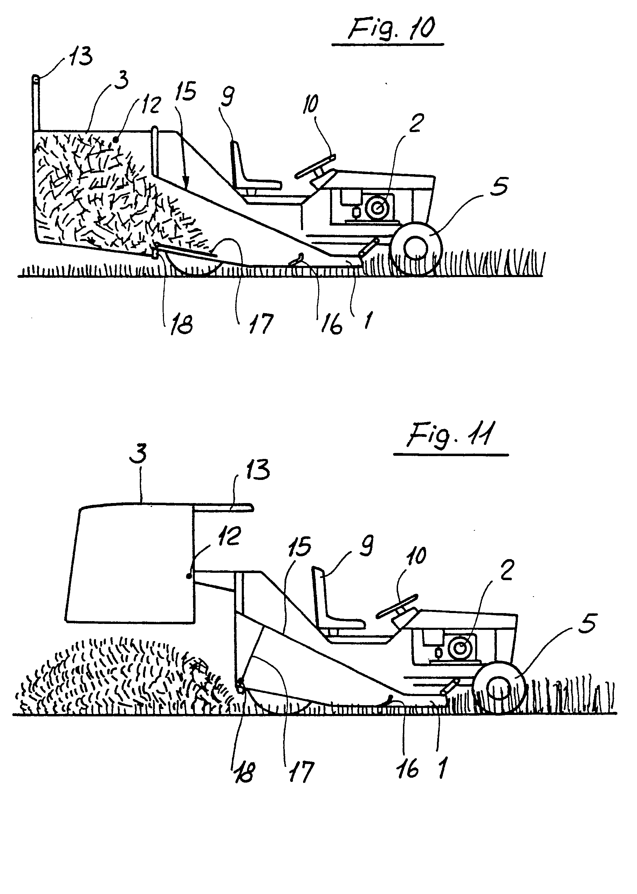

With reference to Figs. 7 and 10, there is illustrated therein the operative condition of the cut grass collecting vessel and of the casing of the mowing machine, of a walking operator mowing machine and a sitting operator mowing machine respectively, as the collecting vessel is completely full and a portion of the cut grass has been accumulated in the conveying duct, that is at the time when the collecting vessel is to be emptied.

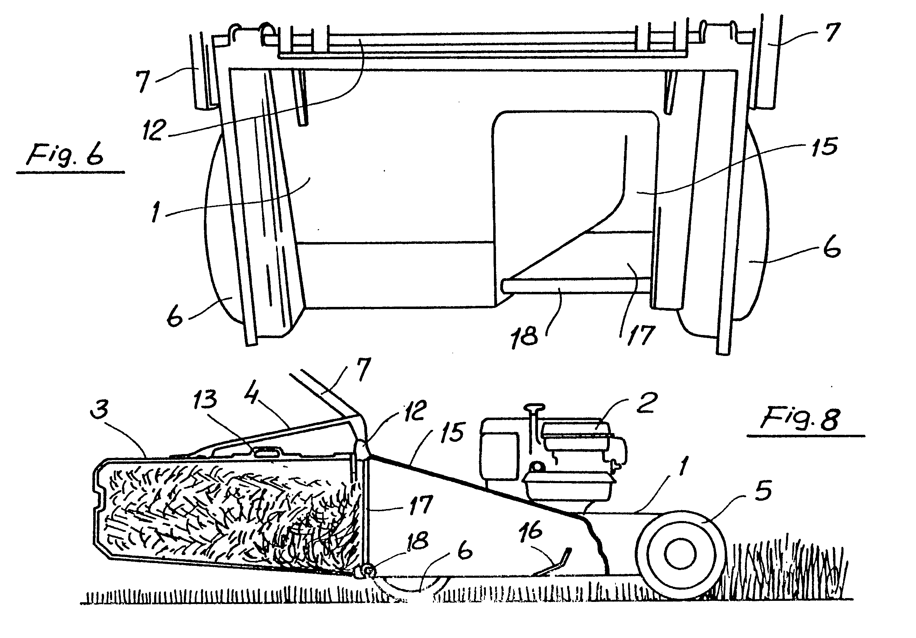

Fig. 8 schematically illustrates the condition of the cut grass collecting vessel of a walking operator mowing machine, as, after having rotated the movable bottom wall according to the present invention, the vessel is ready to be disengaged from the mowing machine, in order to be emptied.

It should be apparent that the grass which has been deposited in the conveying duct, that is outside of the collecting vessel, is pushed, because of the rotation of the bottom moveable wall, inside said vessel.

The latter, accordingly, is capable of containing a larger amount of cut grass, thereby recovering cut grass which, in the conventional mowing machines, would have been left on the ground or in the conveying duct, with a consequent requirement of carrying out a manual operation for removing it.

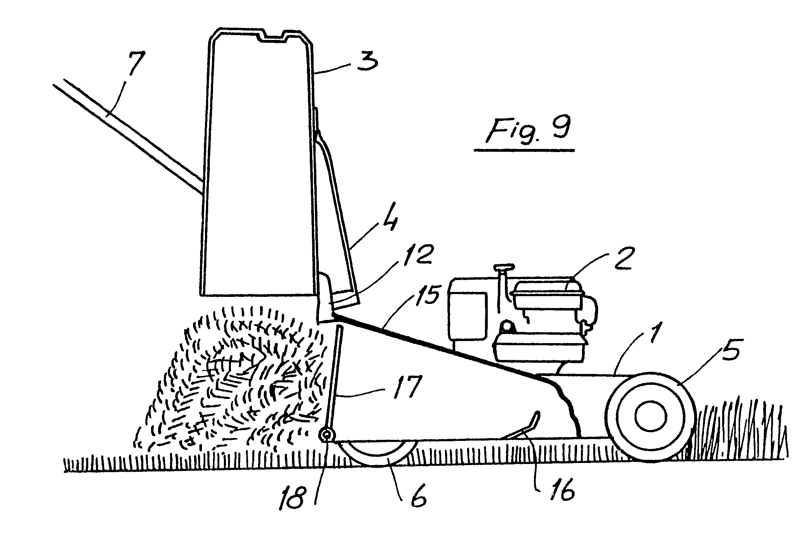

Figs. 9 and 11 illustrate, schematically, the emptying condition of the collecting vessel of a walking operator mowing machine and a sitting operator mowing machine respectively, as the cut grass collecting vessel is discharged by upwardly rotating the rear wall or the vessel, in such a way as to leave on the ground heaps of cut grass.

Also in that case, the advantage of the bottom movable wall according to the present invention will be apparent, since the discharged grass is better collected and the conveying duct will be devoid of any amounts of cut grass therein.

Accordingly the cutting operation may be started again, after having emptied the vessel, without the need of manually cleaning the conveying duct.

From the above disclosure it should be apparent that the mentioned movable wall is capable of providing the mowing machine with great advantages, since the bottom movable wall of the conveying duct is held in such a position which is parallel or nearly parallel to the ground, during the operation, in such a way as to close the bottom portion of said conveying duct and collect that cut grass which is not capable of entering the collecting vessel.

Moreover, at the end of the cutting operation, the operator may cause the bottom movable wall to rotate about the articulated side thereof, in such a way that said movable wall will be compelled to rotate rearwardly, thereby closing the outlet mouth of the conveying duct and, contemporaneously, the inlet mouth of the cut grass vessel.

It should be apparent that, owing to the mentioned rotation of said movable wall, a great part of the cut grass outside of the vessel will be pushed into said vessel and compacted therein, thereby emptying the conveying duct.

At the end of its rotation the movable wall will be in a perpendicular or nearly perpendicular position with respect to the ground.

Such a characteristic improves the cut grass transfer towards said vessel.

Simultaneously the discharging mouth of the cut grass conveying duct is closed by said movable wall thereby preventing any bodies susceptible to be present on the ground from being projected outside of the duct by the rotating cutting blade.

The operator, moreover, is prevented from accidentially contacting the cutting blade.

Obviously a suitable coupling device will be provided effective to prevent the operator from taking up or rotating the cut grass vessel before the conveyor movable wall has been rotated in a sufficient way to assure the closure of the discharging mouth of the conveying duct and the discharging of the grass collected therein.

Thus both the grass collection and operation safety will be improved.

In practicing the invention the used materials, provided that they are compatible with the intended use, as well as the contingent shape and size may be any according to requirements.

**Claims**

1. A grass mowing machine comprising a frame (8), an engine (2) supported by the frame, a casing (1) having a lowermost rear edge, and being supported by said frame on front and rear wheels (5, 6), said casing housing at least one grass cutting blade (16) rotatable around an axis perpendicular to the ground, said casing being open at the bottom for communication with the grass to be cut, a conveyor duct having a top wall coupled to side walls substantially perpendicular to the ground, and having an outlet located at the rear of said casing and having an enlarged cross-section at said outlet, a vessel (3) for collecting the cut grass at the rear of said casing, a movable wall (17) being mounted adjacent the duct outlet, pivotable to a substantially vertical position during the grass-discharging operation and to a substantially horizontal position during grass cutting, the duct having a bottom wall consisting at least partially of said movable wall when in said substantially horizontal position, characterized in that the rear wheels are mounted on individual axis outboard of the trajectory of the movable wall and the movable wall is mounted for pivoting about an axis located substantially at the level of said lowermost edge.

2. A mowing machine according to Claim 1, characterized in that said movable wall (17), in its substantially vertical position, acts as a closure member for said outlet of said conveyor duct (15) thus preventing the operator from accidentally accessing said rotating blade.

3. A mowing machine according to Claim 1, characterised in that the inlet of said vessel is located at the outlet of said conveyor duct.

**Patentansprüche**

1. Grasmähmaschine, einschließend einen Rahmen (8), einen von dem Rahmen abgestützte Motor (2), ein Gehäuse (1) mit einem Hinterhieb und von dieses Rahmen auf Vorder- und Hinterräder (5, 6) gestützt, wobei der obengenannte Körper wenigstens eine Grasmähklinge (16) einschließt, die um eine Achse senkrecht dem Boden drehbar ist, und wobei dieser Körper au Boden um mit der mähenden Gras zu kommunizieren geöffnet ist, eine Zuleitung mit einer oberen Wand, die mit wesentlich den Boden senkrechten Seitenwände und mit einem Ausgang, der hinter dem obengenannten Körper angeorndnet ist, und einen an dem Ausgang sich erweiternde Querschnitt, ein das gemähte Gras aufnehmendes Gefäss hinder dem obengenannten Körper, wobei neben der Zuleitung einen bewegliche Wand (17) drehbar in seiner wesentlich senkrechten Stellung während der Grasabladung und in seiner wesentlich waagenrechten Stellung während des Grasmähen ist, wobei die Zuleitung als sie sich seiner wesentlich waagenrechten Stellung befindet, einen wenigstens teilweise aus der obengenannten beweglichen Wand bestehende Bodenwand besitzt, dadurch gekennzeichnet, daß die Hinterräder auf individuellen Achsen außer der Bahn der beweglichen Wand um einer Achse, die wesentlich eine gleiche Höhe als den obengenannte Hieb hat, drehend angeordnet ist.

2. Grasmähmaschine nach Anspruch 1, dadurch gekennzeichnet, daß die obengenannte bewegliche Wand (17) in seiner wesentlich senkrechten Stellung als Schlußglied für den obengenannte Ausgang der obengenannten Zuleitung (15) wirkt, um so dem Bedienungsmann sich zufällig an die rotierende Klinge annähern zu hindern.

3. Grasmähmaschine nach Anspruch 1, dadurch gekennzeichnet, daß der Eingang des obengenannten Gefäßes and dem Ausgang der obengenannten Zuleitung angeordnet ist.

**Revendications**

1. Machine à faucher, comprenant un chassis (8), un moteur (2) supporté par ce chassis, où un corps (1) a un pan postérieur et est supporté par ledit chassis sur roues avant et arrière (5, 6), ledit corps contenant au moins une lame faucheuse (16) pivotant autour d'un axe perpendiculaire au sol, où ledit corps est ouvert en bas pour communiquer avec le gazon qui doît être fauché, une conduite d'abduction ayant une paroi supérieure accouplée à lesdites parois latérales qui sont essentiellement perpendiculaires au sol, et ayant une sortie située derrière ledit corps et ayant une coupe transversale qui s'élargit à ladite sortie, un vaisseau (3) pour accueillir le gazon coupé derrière ledit corps, un paroi mobile (17) étant montée proche de la conduite de sortie, pivotant en position essentiellement verticale pendant l'opération de décharge du gazon et en position essentiellement horizontale pendant le fauchage du gazon, la conduite ayant une paroi au bas consistant au moins partiellement dans ladite paroi mobile quand elle se trouve dans ladite position essentiellement horizontale, caractérisée en ce que les roues arrière sont montées sur axes individuels au déhors de la trajectoire de la paroi mobile et la paroi mobile est montée pour pivoter autour d'un axe situé essentiellement au niveau didit pan.

2. Machine à faucher selon la revendication 1, caractérisée en ce que ladite paroi mobile (17) dans sa position essentiellement verticale, fonctionne comme membre de formeture pour ladite sortie de ladite conduite d'abduction (15), ainsi d'empêcher à l'opérateur de s'approcher accidentalement à ladite lame pivotante.

3. Machine à faucher selon la revendication 1, caractérisée en ce que l'accès dudit vaisseau est situé à la sortie de ladite conduite d'abduction.

0 172 295

*Fig.1*

*Fig.2*

_Fig. 3_

_Fig. 4_

2

Fig. 5

Fig. 7

0 172 295

Fig. 6

Fig. 8

4

*Fig. 9*

0 172 295

_Fig. 10_

_Fig. 11_